(19) Europäisches Patentamt
European Patent Office
Office européen des brevets

(11) Publication number: **0 285 231 B1**

(12) **EUROPEAN PATENT SPECIFICATION**

(45) Date of publication of patent specification:
**07.08.91 Bulletin 91/32**

(51) Int. Cl.⁵: **B09B 3/00, C02F 11/00, B05B 15/12**

(21) Application number: **88300070.5**

(22) Date of filing: **06.01.88**

(54) **Method and apparatus for treating mixed organic and inorganic wastes.**

(30) Priority: **02.04.87 US 33184**

(43) Date of publication of application:
**05.10.88 Bulletin 88/40**

(45) Publication of the grant of the patent:
**07.08.91 Bulletin 91/32**

(84) Designated Contracting States:
**DE ES FR GB IT**

(56) References cited:
EP-A- 0 184 411
EP-A- 0 200 418
EP-A- 0 277 299
GB-A- 2 096 297
GB-A- 2 165 259
US-A- 4 139 462
US-A- 4 208 285

(56) References cited:
PATENT ABSTRACTS OF JAPAN, vol. 6, no. 94 (C-105)[972], 2nd June 1982, page 103 C 105; & JP-A-57 25 393 (IWANO KOUYU K.K.) 10-02-82
PATENT ABSTRACTS OF JAPAN, vol. 4, no. 34 (C-3)[516], 22nd March 1980, page 82 C 3; & JP-A-55 8810 (TOYOTA JIDOSHA KOGYO K.K.) 22-01-1980

(73) Proprietor: **HADEN DRYSYS INTERNATIONAL LIMITED**
Swan Centre 1506/1508 Coventry Road
Yardley
Birmingham B25 8AD (GB)

(72) Inventor: **Johnson, Jeffrey C.**
31586 Mayfair Lane
Birmingham, Michigan 48009 (US)
Inventor: **Slater, Andrew**
1396 Trevino
Troy, Michigan 48098 (US)

(74) Representative: **Parry, Christopher Stephen et al**
PAGE, WHITE & FARRER 54 Doughty Street
London WC1N 2LS (GB)

## Description

This invention relates to a method and apparatus for treating waste sludge such as waste paint sludge, to dry it, substantially reduce its weight and volume and to detoxify the sludge.

Treatment of waste in industrial facilities causes a variety of environmental and economic problems. Over the years, increasingly stringent governmental pollution regulations as well as the increased cost of waste disposal have led to escalating concern in the treatment and disposal of waste. The difficulty in disposing of waste materials is exacerbated when the waste includes both organic substances, in the form of hydrocarbons, and inorganic substances. In these circumstances it is desirable to remove the hydrocarbons from the waste before disposal, yet the processing of the hydrocarbon constituents can be troublesome and expensive when the hydrocarbons are still mixed with other inorganic constituents. Furthermore, recently enacted laws regulating the disposal of waste have substantially reduced the amount of hazardous or toxic waste which may be generated and disposed of by individual industrial facilities.

Particularly difficult problems in the treatment of waste are found in the design of paint spraybooth facilities where a large volume of paint overspray and resultant paint sludge waste is generated. Paint sludge includes both organic and inorganic constituents and also substances which are intended to coalesce into a film ; these coalescing substances typically make paint sludge very sticky and difficult to handle. In addition, paint sludge often includes both liquid and solid hydrocarbons which may result in its classification as a hazardous or toxic waste which precludes normal disposal.

It is therefore desirable to provide a method and apparatus which effectively and economically treat mixed organic and inorganic wastes. It is also desirable to provide a method and apparatus which minimize the weight and volume of waste paint sludge while substantially eliminating its hazardous characteristics, including toxicity.

A method and apparatus for drying well drill cuttings are described in GB-A-2096297. The cuttings are delivered from a hopper to a fluidised bed drier and treated there with a large volume of air which is pre-heated. Gases are then ducted to a condenser and the dried cuttings are discharged. Such an apparatus and method would not be suitable for treating highly sticky waste sludges such as waste paint sludge since these sludges are not susceptible to fluidisation.

Apparatus particularly designed for the treatment of sludges such as waste paint sludge is described in EP-A-0277299 which is comprised in the state of the art by virtue only of Article 54(3)EPC. In EP-A-0277299 the problem of drying very sticky sludge is overcome by mixing the sludge with a scouring aggregate and treating the mixture in an indirect heat exchanger.

The present invention provides a method for the treatment of waste sludge containing liquids and solids, the method comprising the steps of :
delivering the sludge to an indirect heat exchanger ;
conveying the sludge through the heat exchanger and heating the sludge in the heat exchanger to produce a gas stream and a substantially dry solids stream ; and
ducting the gas stream from the heat exchanger for further processing and discharging the solids stream; wherein the method includes the step of mixing the sludge with a scouring aggregate to create a processing mixture, such that it is this mixture which is heated in the heat exchanger ; the method further including the step wherein, after being ducted from the heat exchanger, at least a portion of the gas stream is incinerated and at least a portion of the heat generated by the incineration is transferred back to the heat exchanger.

The present invention also provides apparatus for treatment of waste sludge containing liquids and solids comprising :
an indirect heat exchanger having means for conveying sludge therethrough ;
means for delivering the waste sludge to the heat exchanger ;
ducting means for removing gases from the heat exchanger ;
discharge means for removing solids from the heat exchanger ;
means for mixing the waste sludge with a scouring aggregate for treatment in the heat exchanger ;
incinerator means for incinerating at least a portion of the gases ducted from the heat exchanger ;
and heat transfer means for transferring at least a portion of the heat generated by incineration of the gases back to the heat exchanger.

In the preferred embodiment of the invention, waste paint sludge comprising water, organic substances including liquid and solid hydrocarbons, and inorganic substances is processed to extract some of the liquids to thereby produce a high solids paint sludge. The high solids sludge is then heated in a volitilization chamber to drive off any remaining liquid and the hydrocarbon components of the solids. As a result, the solids discharged from the volitilization chamber are substantially inorganic and have a solids content of substantially 100%. This dried particulate product has a greatly reduced weight and volume as compared to the initial sludge and substantially reduced toxicity. The hydrocarbons present in the gases generated by the volitilization step may be further processed by incineration or condensation.

The high solids paint sludge is mixed with a scouring aggregate to create a processing mixture which exhibits improved manageability for further processing. The processing mixture is passed through a heat exchanger to heat the mixture and volitilize the residual liquid and solid hydrocarbons contained in the mixture. A dried particulate product having substantially reduced weight volume and toxicity is discharged from the heat exchanger. This dried particulate contains the scouring aggregate which may be separated from the dried particulate product. In some instances it may be desirable to dispose of both the dried particulate product and the scouring aggregate together, or direct the discharged dried particulate product and scouring aggregate for further processing.

Embodiments of the invention are described below with reference to the accompanying drawings, in which :

FIGURE 1 is a block diagram representing the steps of the method of the present invention ;

FIGURE 2 is a schematic diagram illustrating one embodiment of an apparatus which may be used to carry out the method of the present invention ; and

FIGURE 3 is another schematic diagram illustrating a second embodiment of an apparatus utilizing the present method.

The disclosed method and apparatus have particular application to waste paint sludge. It will be appreciated by those skilled in the art, however, that the present invention finds application and advantage in a variety of environments other than in the treatment waste paint sludge. For example, soils and sewage contaminated by petroleum products and the residues from solvent recovery processes may also be treated in accordance with the present invention. With this understand of the broader scope of the invention, the preferred embodiments will now be described in the context of waste paint sludge treatment.

Apparatus and methods for collecting and removing paint sludge from the water used in paint spray booths have been previously disclosed. One such arrangement, causing paint sludge to raft on the surface of a collecting tank, is disclosed in U.S. Patent No. 4,100,066 to Bloomer et al.

It is desirable to dewater the waste paint sludge as much as possible prior to employing the method and apparatus disclosed in the present application. Therefore, it may be desirable to utilize the method and system of U.S. Patent No. 4,100,066 to treat the waste paint sludge. This treatment may be in the form of one or more stages of processing to dewater or extract some of the water from the waste paint sludge.

It will be appreciated by those skilled in the art that the waste paint sludge treated in accordance with the present invention is a complex material and different from most other waste sludges. First, it can include a variety of liquid hydrocarbons such as solvents, thinners and detackifying agents. It will also typically include solid hydrocarbon resins which "cure", that is cross-link, and form a film upon heating and volitilization of liquid carriers. Thus, paint sludges usually become very sticky when partially dried. Further, paint sludge can include inorganic substances such as fillers, metal flake and, of course, pigments. Any one or all of these components may be classified as hazardous or toxic.

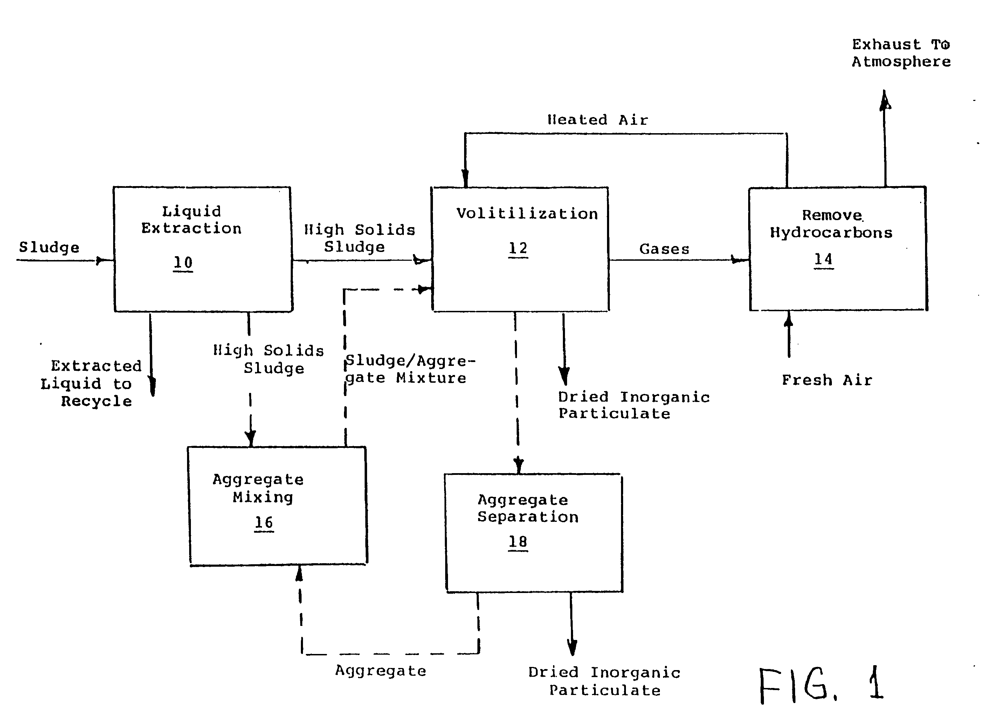

Referring now to FIGURE 1, the steps of the method of the present invention are depicted in block diagram form. The waste paint sludge, typically with less than about 10% solids content, is first processed to extract some of the liquid as indicated at 10. The separated water may then be recycled to the paint finishing facility for reuse. The resulting concentrated paint sludge, when a solids content of between 15% and 40%, is then conveyed to and through a volitilization chamber at 12 where it is heated to about 260°C (500°F) to 315°C (600°F) to volitilize residual water and liquid and solid hydrocarbons. Thus, not only are the typically "volitile" liquid hydrocarbons driven from the sludge, but the solid, typically "non-volitile" hydrocarbons are driven off as well. In this way, the hydrocarbons may be subsequently processed separately from the remaining inorganic solids.

As a result of the sludge volitilization in step 12, an inorganic particulate product is obtained having a solids content of substantially 100% and substantially reduced volume and weight. Moreover, because all hydrocarbons have been driven off, the resulting particulate is substantially detoxified.

Various well known methods may be used to process the gases discharged from the volitilization step and to substantially reduce or eliminate the toxicity of these gases. Such methods, indicated at 14, include, but are not limited to, heating the discharged gas to a temperature high enough to incinerate its hydrocarbon components. In practice, it has been determined that these hydrocarbons may be incinerated at a temperature of about 815°C (1500°F).

In order to enhance the energy efficiency of the process, it may be desirable to transfer a portion of the heat generated during this incineration step to fresh air which is thereafter circulated through the volitilization chamber and mixed with the gases generated there. This procedure helps to maintain the flash point of these gases well above the temperatures extant within the volitilization chamber, thereby avoiding the possibility of an explosion. It may also be desirable to employ another heat exchanger to utilize a further portion of the heat generated by the gas incineration process to maintain the elevated temperatures of the heating medium passed through the heat exchanger used in the volitilization step.

Another method of processing the gas to substantially reduce its toxicity after it is discharged from the volitilization chamber is condensing the discharged gas. Such a condensing process substantially eliminates the hydrocarbon and other toxic components of the gas.

In accordance with the invention, the high solids paint sludge is first mixed with an inorganic scouring aggregate before being heated in the volitilization chamber. This step is shown by the dash lines and block 16 in FIGURE 1. A variety of scouring aggregates can be mixed with the waste paint sludge to create the desired processing mixture. Such scouring aggregates may include, but are not limited to, metal particulate, rock salt, gravel, coal, or similar scouring particles. Additionally, the scouring aggregate may be a frangible material which may or may not be separated from the dried particulate product obtained.

The scouring aggregate and paint sludge solids are preferably mixed at a ratio of about 1 : 1 prior to conveyance through the volitilization chamber in step 12. The dried particulate product and scouring aggregate mixture discharged from the volitilization step has a solids content of about 100%.

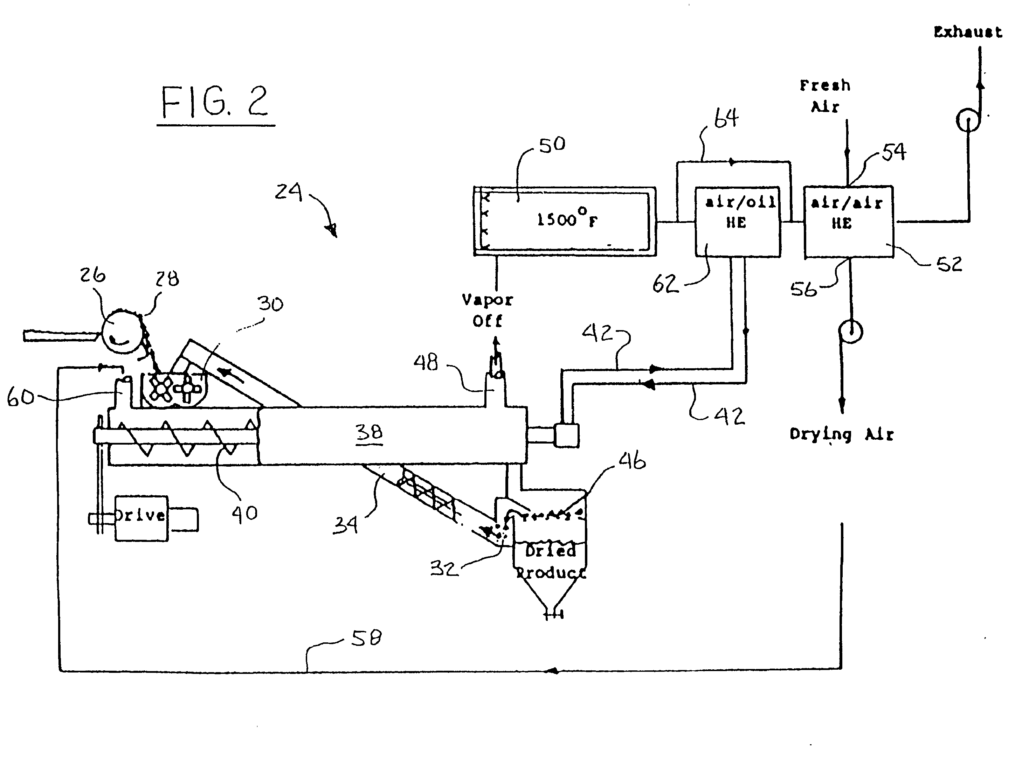

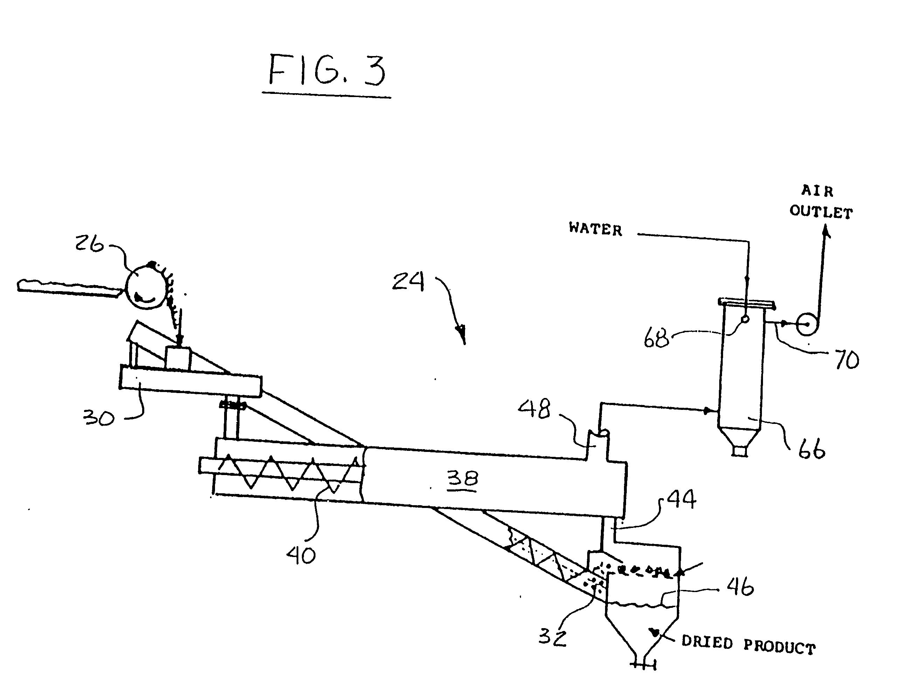

Turning now to FIGURES 2 and 3, exemplary embodiments of the paint sludge treating system, generally designated 24, are shown. The paint sludge, as described above, is supplied to extraction device 26, which may comprise a rotating strainer, for extracting some of the liquid from the paint sludge. The resulting high solids sludge is conveyed to and mixed in device 30 with scouring aggregate 32 supplied on recycling conveyor 34 to form a processing sludge mixture. Device 30 may include, but is not limited to, a pug-mill or similar mixing device.

The processing sludge mixture is then discharged into heat exchanger 38. For purposes of describing the exemplary embodiments of the invention herein, heat exchanger 38 is shown as an indirect heat exchanger which may include one or more hollow flights 40 through which a heating medium is supplied via circulating lines 42. The heating medium may comprise oil, water or similar heat exchanging media. An indirect heat exchanger is described in US-A-4208285.

As the mixture is passed through heat exchanger 38, it is heated, volitilized in part and dried. Thus, the residual liquid is evaporated and solid hydrocarbons are volitized from the mixture and a dried particulate product is created having substantially reduced volume and weight. Moreover, the toxicity of the solid sludge material is substantially eliminated (with the exception of potentially toxic inorganic substanances) as the processing mixture is volitilized with the toxic organic constiuents and hydrocarbons present in the sludge being driven off as a gas.

The dried particulate product and scouring aggregate mixture is then discharged at outlet 44 of heat exchanger 38. The dried particulate product and scouring aggregate mixture may be deposited into a sieve 46 where the dried particulate product is separated from the scouring aggregate which, in turn, is deposited on recycling conveyor 34 for reuse in mixing device 30.

It may be desirable to maintain the mixture of scouring aggregate and dried particulate product discharged from the indirect heat exchanger 38 in tact, such that they are not separated by sieve device 46. This mixture may be disposed of or may be recycled without separation for further processing or additional heating in heat exchanger 38. As can be seen in FIGURES 2 and 3, gas is generated within heat exchanger 38 during the volitilization of the paint sludge solid.

As shown in FIGURE 2, the gas discharged at outlet 48 may be passed to burner 50 and incinerated to remove the hydrocarbon components of the gas, reducing and substantially eliminating the toxicity of the gas.

In addition, the heated air provided to first heat exchanger 38 may be heated by the exhaust of gas burner 50 through the use of a second heat exchanger 52. Fresh air is passed through the second heat exchanger at 54 and the exhaust from burner 50 is used to heat this air which may then be circulated via outlet 56 and conduit 58 to inlet 60 of heat exchanger 38. The heated air supplied at inlet 60 accelerates heating and drying of the sludge mixture. The incinerated and detoxified gas exiting heat exchanger 52 may be exhausted to the atmosphere.

As further shown in FIGURE 2, a third heat exchanger 62 may be used to provide a source of heat for the volitilization chamber. The heated exhaust from burner 50 may also be directed through heat exchanger 62 to heat the medium in circulating lines 42. In this particular embodiment, a bypass line 64 is provided such that exhaust from burner 50 may simultaneously be supplied to second heat exchanger 52. It should be understood that one or more heat exchangers may be provided to function as the heat source for both the heat exchange medium in circulating lines 42 and the heated air supplied to first heat exchanger 38 at inlet 60.

As shown in FIGURE 3, the vapor exhausted at outlet 48 of heat exchanger 38 may alternately be passed to condenser 66 to subtantially reduce or eliminate the toxicity of the gas generated during the volitilization process within heat exchanger 38. Condenser 64 uses water supplied at inlet 68 to condense the hydrocarbon components of the gas to reduce and substantially eliminate the toxicity of the gas. The detoxified gas is then exhausted to the atmosphere at outlet 70.

## Claims

1. A method for the treatment of waste sludge containing liquids and solids, the method comprising the steps of :

delivering the sludge to an indirect heat exchanger ;
conveying the sludge through the heat exchanger and
heating the sludge in the heat exchanger to produce
a gas stream and a substantially dry solids stream ;
and
ducting the gas stream from the heat exchanger for
further processing and discharging the solids stream;
wherein the method includes the step of mixing the
sludge with a scouring aggregate to create a processing
mixture, such that it is this mixture which is
heated in the heat exchanger ; the method further
including the step wherein, after being ducted from
the heat exchanger, at least a portion of the gas
stream is incinerated and at least a portion of the heat
generated by the incineration is transferred back to
the heat exchanger.

2. The method of claim 1 further comprising the
step of extracting a portion of the liquid from the
sludge thereby producing a high solids sludge, prior
to delivering the sludge to the heat exchanger.

3. The method of claim 1 or claim 2 wherein the
sludge is heated to a temperature of between about
260°C and 315°C in the heat exchanger.

4. The method of claim 2 wherein said waste
sludge has a solids content of less than about 10%
and said high solids sludge has a solids content of between
about 15% and 40%.

5. The method of claim 4 wherein said high solids
sludge and scouring aggregate are mixed in a weight
ratio of about 1 : 1.

6. The method of any preceding claim further
comprising the step of separating the scouring aggregate
from the solids stream discharged from the heat
exchanger, and recycling the scouring aggregate for
re-use.

7. The method of any preceding claim wherein the
indirect heat exchanger is a hollow flight, screw conveyor
type indirect heat exchanger.

8. The method of claim 7 wherein a portion of said
heat generated by incineration of the gases is transferred
to a heating medium circulated through the indirect
heat exchanger.

9. The method of any preceding claim wherein all
the steps thereof are carried out continuously.

10. The method of any preceding claim wherein
the sludge is waste paint sludge.

11. Apparatus for treatment of waste sludge containing
liquids and solids comprising :
an indirect heat exchanger (38) having means
(40) for conveying sludge therethrough ;
means (30) for delivering the waste sludge to the
heat exchanger ;
ducting means (48) for removing gases from the
heat exchanger ;
discharge means (44) for removing solids from
the heat exchanger ;
means (30) for mixing the waste sludge with a
scouring aggregate for treatment in the heat exchanger ;
incinerator means (50) for incinerating at least a
portion of the gases ducted from the heat
exchanger ;
and heat transfer means (62,42) for transferring
at least a portion of the heat generated by incineration
of the gases back to the heat exchanger
(38).

**Patentansprüche**

1. Verfahren zur Behandlung von Abfallschlamm,
der Flüssigkeiten und Feststoffe enthält, wobei das
Verfahren folgende Schritte umfaßt :
Einleiten des Schlamms in einen Oberflächenwärmetauscher ;
Durchleiten des Schlamms durch den Wärmetauscher
und Erhitzen des Schlamms im Wärmetauscher
zur Erzeugung eines Gasstroms und eines im
wesentlichen trockenen Festkörperstroms ; und
Ausleiten des Gasstroms aus dem Wärmetauscher
zur weiteren Verarbeitung und Ausscheiden des Feststoffstroms ;
wobei das Verfahren den Schritt enthält, in welchem
der Schlamm mit einem Spülmittel gemischt wird, um
eine Verarbeitungsmischung dergestalt zu erzeugen,
daß es diese Mischung ist, welche im Wärmetauscher
erhitzt wird ;
und wobei das Verfahren den weiteren Schritt enthält,
in welchem nach der Ausleitung aus dem Wärmetauscher
wenigstens ein Teil des Gasstroms verascht
und wenigstens ein Teil der durch die Veraschung
entstandenen Hitze in den Wärmetauscher zurückgeleitet
wird.

2. Verfahren nach Anspruch 1, welches außerdem
den Schritt enthält, in welchem vor dem Einleiten
des Schlamms in den Wärmetauscher ein Teil der
Flüssigkeit aus dem Schlamm extrahiert wird,
wodurch ein Schlamm mit hohem Feststoffanteil entsteht.

3. Verfahren nach Anspruch 1 oder 2, wobei der
Schlamm im Wärmetauscher auf eine Temperatur
zwischen 260°C und 315°C erhitzt wird.

4. Verfahren nach Anspruch 2, wobei der Abfallschlamm
einen Feststoffanteil von weniger als ca.
10% und der Schlamm mit hohem Feststoffanteil
einen Feststoffanteil zwischen ca. 15% und 40% aufweist.

5. Verfahren nach Anspruch 4, wobei der
Schlamm mit hohem Feststoffanteil und das Spülmittel
in einem Gewichtsverhältnis von ca. 1 : 1 gemischt
werden.

6. Verfahren nach einem der vorangehenden
Ansprüche, welches außerdem den Schritt enthält, in
welchem das Spülmittel von dem aus dem Wärmetauscher
ausgeschiedenen Feststoffstrom getrennt und
das Spülmittel zur Wiederverwendung zurückgeführt

7. Verfahren nach einem der vorangehenden Ansprüche, wobei der Oberflächenwärmetauscher ein Oberflächenwärmetauscher mit Hohlschneckenförderer ist.

8. Verfahren nach Anspruch 7, wobei ein Teil der durch Veraschung der Gase erzeugten Hitze auf ein Wärmeübertragungsmittel, welches durch den Oberflächenwärmetauscher umgewälzt wird, übertragen wird.

9. Verfahren nach einem der vorangehenden Ansprüche, wobei alle Schritte desselben kontinuierlich durchgeführt werden.

10. Verfahren nach einem der vorangehenden Ansprüche, wobei der Schlamm Abfallfarbschlamm ist.

11. Vorrichtung für die Behandlung von Abfallschlamm, welcher Flüssigkeiten und Feststoffe enthält, bestehend aus :

    einem Oberflächenwärmetauscher (38) mit einer Einrichtung (40) zum Durchleiten des Schlamms durch denselben ;

    einer Einrichtung (30) zum Einleiten des Abfallschlamms in den Wärmetauscher ;

    einer Ausleiteinrichtung (48) zum Entfernen von Gasen aus dem Wärmetauscher ;

    einer Ausscheideeinrichtung (44) zum Entfernen von Feststoffen aus dem Wärmetauscher ;

    einer Einrichtung (30) zum Mischen des Abfallschlamms mit einem Spülmittel für die Behandlung im Wärmetauscher ;

    einer Veraschungseinrichtung (50) zum Veraschen mindestens eines Teils der aus dem Wärmetauscher ausgeleiteten Gase ;

    und einer Wärmeübertragungseinrichtung (62, 42) zum Rückübertragen mindestens eines Teils der durch Veraschung der Gase erzeugten Wärme auf den Wärmetauscher (38).

## Revendications

1. Procédé pour le traitement des boues usées contenant des liquides et des solides, le procédé comprenant les étapes consistant :

à amener les boues dans un échangeur de chaleur indirect ;

à acheminer les boues à travers l'échangeur de chaleur et à chauffer les boues dans l'échangeur de chaleur pour produire un flux gazeux et un flux solide substantiellement sec ; et

à évacuer le flux gazeux de l'échangeur de chaleur pour le traitement supplémentaire et à rejeter le flux solide ;

ledit procédé comprenant l'étape consistant à mélanger les boues à un agrégat de récurage pour créer un mélange de traitement, de manière à ce que ce soit ce mélange qui soit chauffé dans l'échangeur de chaleur ; le procédé comprenant en outre l'étape dans laquelle, après que le flux gazeux est sorti de l'échangeur de chaleur, au moins une partie dudit flux gazeux est incinéré, et au moins une partie de la chaleur produite par l'incinération est ramenée dans l'échangeur de chaleur.

2. Procédé selon la revendication 1, comprenant en outre l'étape consistant à extraire une partie du liquide des boues, produisant ainsi des boues à extrait sec élevé, avant d'amener les boues dans l'échangeur de chaleur.

3. Procédé selon la revendication 1 ou 2, dans lequel les boues sont chauffées à une température comprise entre environ 260°C et 315°C dans l'échangeur de chaleur.

4. Procédé selon la revendication 2, dans lequel lesdites boues usées ont un extrait sec inférieur à environ 10% et lesdites boues à extrait sec élevé ont un extrait sec d'environ 15% à 40%.

5. Procédé selon la revendication 4, dans lequel lesdites boues à extrait sec élevé et l'agrégat de récurage sont mélangés selon un rapport pondéral d'environ 1 : 1.

6. Procédé selon l'une quelconque des revendications précédentes, comprenant l'étape consistant à séparer l'agrégat de récurage du flux solide rejeté par l'échangeur de chaleur, et à recycler l'agrégat de récurage pour réutilisation.

7. Procédé selon l'une quelconque des revendications précédentes, dans lequel l'échangeur de chaleur indirect est un échangeur de chaleur indirect du type convoyeur à vis sans fin creuse.

8. Procédé selon la revendication 7, dans lequel une partie de ladite chaleur produite par l'incinération des gaz est transférée dans un milieu de chauffage traversant l'échangeur de chaleur indirect.

9. Procédé selon l'une quelconque des revendications précédentes, dans lequel toutes les étapes dudit procédé sont réalisées en continu.

10. Procédé selon l'une quelconque des revendications précédentes, dans lequel les boues sont des boues de peinture usées.

11. Appareil pour le traitement des boues de peinture usées contenant des liquides et des solides, comprenant :

    un échangeur de chaleur indirect (38) avec un moyen (40) pour transporter les boues à travers ledit échangeur de chaleur ;

    un moyen (30) pour amener les boues usées dans l'échangeur de chaleur ;

    un moyen de canalisation (48) pour évacuer les gaz de l'échangeur de chaleur ;

    un moyen de déversement (44) pour évacuer les solides de l'échangeur de chaleur ;

    un moyen (30) pour mélanger les boues usées à un agrégat de récurage, pour le traitement dans l'échangeur de chaleur ;

    un moyen d'incinération (50) pour incinérer au moins une partie des gaz provenant de l'échangeur de chaleur ; et

des moyens de transfert de chaleur (62, 42) pour transférer au moins une partie de la chaleur produite par l'incinération des gaz de nouveau vers l'échangeur de chaleur (38).

FIG. 1

EP 0 285 231 B1

# FIG. 2

Exhaust

Fresh Air

64

50

1500°F

air/oil HE

air/air HE

54

52

62

56

Vapor Off

Drying Air

24

26

28

30

48

42

42

60

38

46

Drive

40

34

32

Dried Produce

58

EP 0 285 231 B1

FIG. 3

EP 0 285 231 B1